# EUROPEAN PATENT APPLICATION

(11) **EP 1 441 456 A2**
(43) Date of publication of application: **28.07.2004**
(21) Application number: 03007768.9
(22) Date of filing: 04.04.2003
(51) Int. Cl.: H04H 5/00

(54) **Electronic apparatus for wirelessly transmitting content data, and method of reproducing this content data using an external device**

(30) Priority: 30.09.2002 JP 2002287120
(71) Applicant: Kabushiki Kaisha Toshiba, Tokyo (JP)
(72) Inventor: Yamashita, Naoya, Kabushiki Kaisha Toshiba, Tokyo 105-8001 (JP); Iwasaki, Junichi, Kabushiki Kaisha Toshiba, Tokyo 105-8001 (JP); Tomoda, Ichiro, Kabushiki Kaisha Toshiba, Tokyo 105-8001 (JP)
(74) Representative: Henkel, Feiler & Hänzel

(57) **Abstract**

An electronic apparatus (10) wirelessly connectable to an external device (20) for reproducing content data comprises a unit for transmitting, by radio, content data to be reproduced to the external device (20) wirelessly connected to the electronic apparatus (10), a unit for storing status information relating to the content data, and a unit for resuming, after disconnection between the electronic apparatus (10) and the external device (20), transmission of the content data to the external device (20) based on the stored status information, when wireless connection between the electronic apparatus (10) and the external device (20) is re-established.

## Description

The present invention relates to an electronic apparatus that wirelessly transmits content data such as audio to an external device, and a method of reproducing the content data using the external device.

Recently, attention has been paid to Bluetooth™ as a wireless communication technology. Bluetooth™ is a low-cost, low-power-consumption, short-range wireless communication technology suitable for mobile devices. Bluetooth™ is used for mutual connection of various mobile information devices owned by individual users. The devices are wirelessly connected and, compared to conventional connection by wire, the devices can be connected more freely, simply and easily.

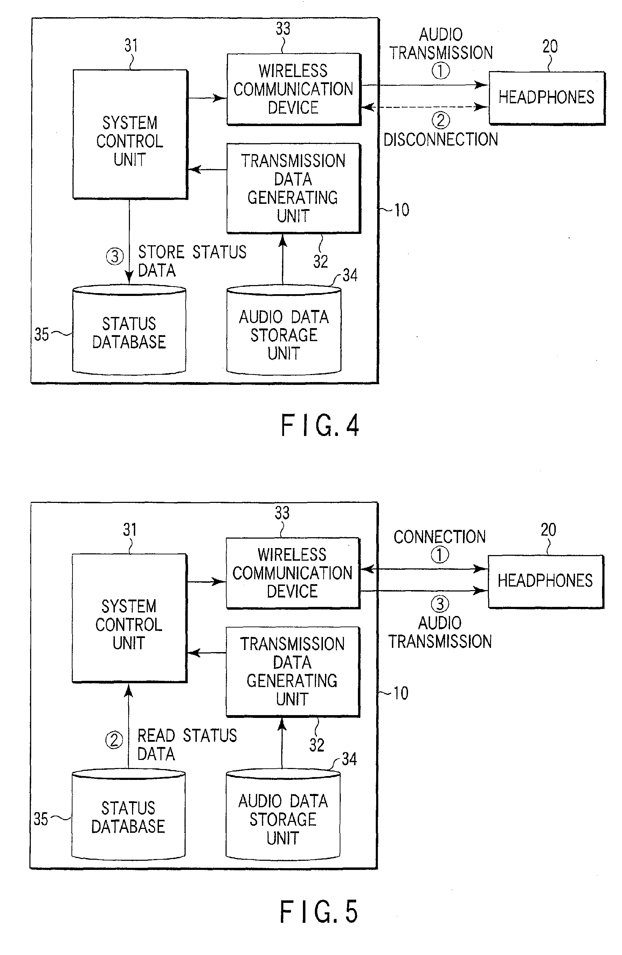

As a system using wireless communication, Jpn. Pat. Appln. KOKAI Publication No. 2002-112383 (pp. 5-6, FIG. 4) discloses a system wherein music data is sent from an electronic device such as a music player to an external device such as headphones by means of radio signals.

In this system, however, there may be a case where wireless connection between the music player and headphones is suddenly disconnected during replay of music due to a problem of a physical distance between the music player and headphones, the presence/absence of a screening object, or the condition of radio waves.

Wireless connection between the music player and headphones may be re-established, for example, if the user wearing the headphones approaches the music player. However, in order to resume reproduction of music data, which was interrupted due to disconnection of the wireless connection, the user is required to perform operations for resuming reproduction.

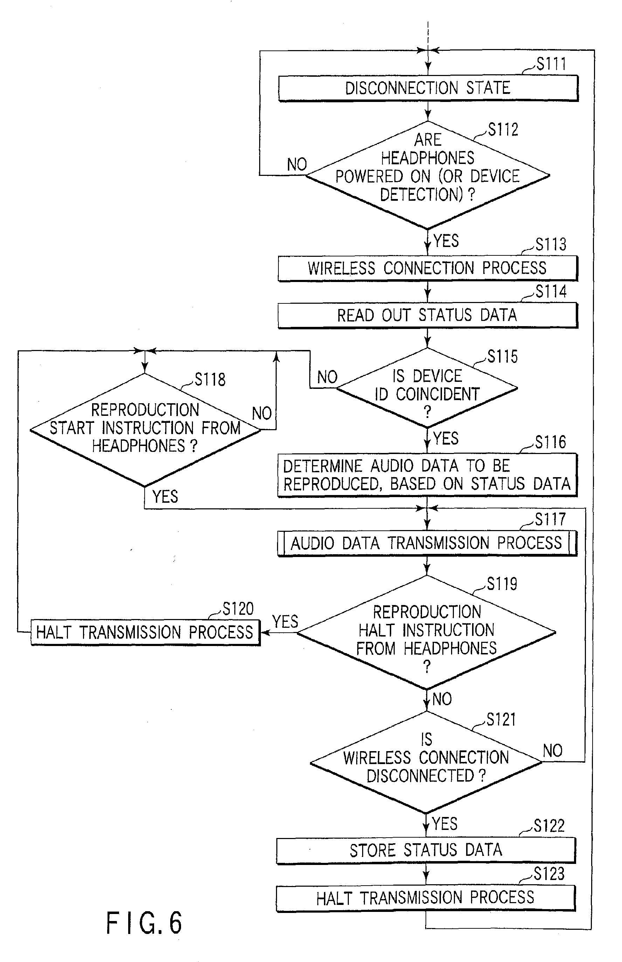

As a technique for enhancing reliability of wireless transmission, Jpn. Pat. Appln. KOKAI Publication No. 2001-186060 (pp. 4-5, FIG. 6) discloses a music data transmission system wherein when a transmission error has occurred in part of music data, this part of music data is retransmitted. In short, this document relates to a retransmission error-correction technique wherein data in which an error was detected is retransmitted.

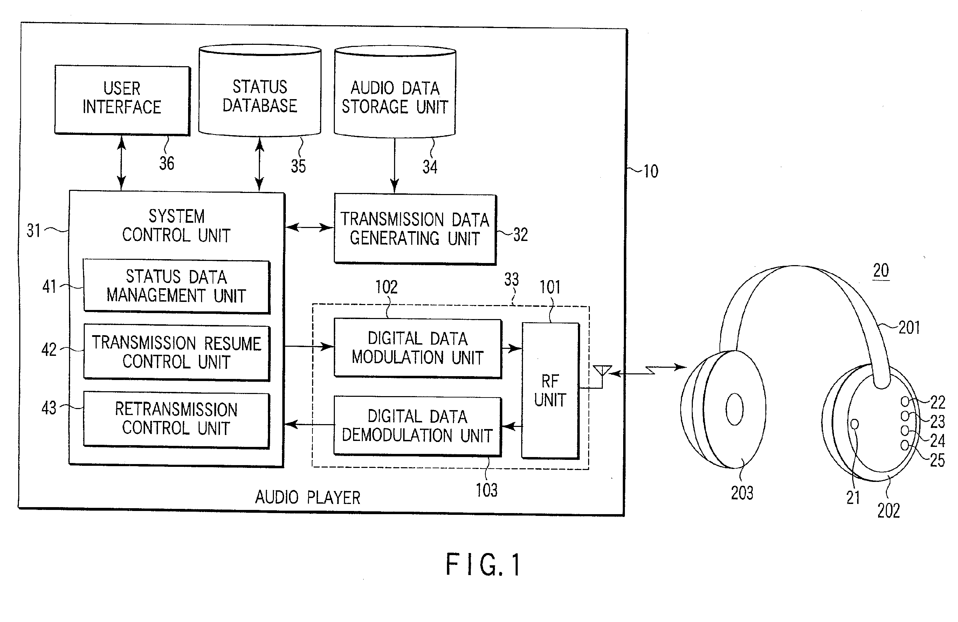

Jpn. Pat. Appln. KOKAI Publication No. 2002-217810 (pp. 3-4, FIG. 1) discloses a wireless mobile terminal device for downloading music data from a music distribution server via a network. The wireless mobile terminal device functions such that when downloading of music data from the music distribution server is interrupted, downloading of music data from the server is resumed from a point of interruption.

The technique of KOKAI No. 2002-217810, however, presupposes that the control relating to the resumption of download from the music distribution server is all performed on the receiver side, that is, on the wireless mobile terminal device.

In a wireless headphone system wherein wireless headphones reproduce music sent by radio from an electronic apparatus such as a music player, the headphones are the receiver-side device. The wireless headphones are worn on the head of the user during use, and thus the functions to be provided on the wireless headphones are strictly limited for the purpose of reduction in size and weight. Hence, it is desired that the transmission-side electronic apparatus such as the music player should have the function of automatically performing the control relating to resumption of reproduction of music data.

In the wireless headphone system using BluetoothTM, various devices may be wirelessly connected to the music player. Thus, it is also necessary to provide a function for determining whether a device that has been newly connected wirelessly to the music player is the device in which reproduction of music data was previously interrupted.

Embodiments of the present invention provide an electronic apparatus and a content reproduction method that can automatically resume the reproduction of content data such as music, which has been interrupted due to disconnection of the wireless connection with an external device such as headphones.

According to embodiments of the present invention, an electronic apparatus for transmitting content data to an external device for reproducing the content data is provided and comprises a first storage unit and a wireless communication device for transmitting to the external device, via a wireless connection between the external device and the electronic apparatus, the content data to be reproduced.

The electronic apparatus further comprises a processor programmed for storing in the storage unit status information relating to the content data. The processor is further programmed for resuming, after disconnection and re-establishment of the wireless connection, transmission of the content data to the external device based on the stored status information.

According to embodiments of the present invention, the status information is stored when the wireless connection between the external device and the electronic apparatus is disconnected. The status information comprises status information relating to content data, transmission of which was interrupted by the disconnection of the wireless connection.

According to embodiments of the present invention, the content data comprises audio data, and the external device comprises headphones configured to reproduce an audio data stream wirelessly transmitted from the electronic apparatus.

According to one embodiment, the status information comprises content identification (ID) information for identifying content data, transmission of which was interrupted by the disconnection of the wireless connection, and device identification (ID) information for identifying a destination device to which transmission of the content data was interrupted by the disconnection of the wireless connection.

When an external device is newly wirelessly connected to the electronic apparatus after the disconnection of the wireless connection, it is determined whether the external device newly wirelessly connected to the electronic apparatus is the external device to which transmission of the content data was interrupted. This determination may be made based on device identification (ID) information of the external device newly wirelessly connected to the electronic apparatus and the device identification (ID) information included in the status information.

When it has been determined that the external device newly wirelessly connected to the electronic apparatus is the external device to which transmission of the content data was interrupted, the transmission of the content data to the external device newly wirelessly connected to the electronic apparatus is resumed. The transmission may be resumed based on the content identification (ID) information included in the status information.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a wireless communication system using an electronic apparatus according to an embodiment of the present invention;
FIG. 2 is a block diagram showing a functional structure of headphones used in the wireless communication system of FIG. 1, according to an embodiment of the present invention;
FIG. 3 shows an example of status data managed by the electronic apparatus in the wireless communication system of FIG. 1, according to an embodiment of the present invention;
FIG. 4 illustrates an operation to be performed by the electronic apparatus when wireless connection between the electronic apparatus and headphones in the wireless communication system of FIG. 1 has been disconnected, according to an embodiment of the present invention;
FIG. 5 illustrates an operation to be performed by the electronic apparatus when wireless connection between the electronic apparatus and headphones in the wireless communication system of FIG. 1 has been re-established, according to an embodiment of the present invention;
FIG. 6 is a flow chart illustrating a process executed by the electronic apparatus in the wireless communication system of FIG. 1, according to an embodiment of the present invention;
FIG. 7 is a flow chart illustrating alternative processes executed by the electronic apparatus in the wireless communication system of FIG. 1, according to embodiments of the present invention; and
FIG. 8 shows an example of status data managed by the electronic apparatus in the wireless communication system of FIG. 1, according to an embodiment of the present invention.

An embodiment of the present invention will now be described with reference to the accompanying drawings.

FIG. 1 shows a block diagram of an electronic apparatus 10 according to an embodiment of the invention. The electronic apparatus 10 is configured to be able to transmit a stream of content data such as, but not limited to, audio data (such as music) and/or video data, to an external device 20 by radio signals. In this embodiment, the electronic apparatus 10 is realized as a portable audio player, and the external device 20 is realized as wireless headphones 20. The wireless headphones 20 function as an output device for outputting sound corresponding to a stream of audio data such as music, which is sent by radio from the audio player 10.

As is shown in FIG. 1, the audio player 10 comprises a system control unit 31, a transmission data generating unit 32, a wireless communication device 33, an audio data storage unit 34, a status database 35, and a user interface 36.

The system control unit 31 may be a processor or other control unit provided for controlling operations of the audio player 10. The system control unit 31 controls the transmission data generating unit 32, wireless communication device 33, etc.

The transmission data generating unit 32 reads out audio data, e.g. music, to be reproduced, from the audio data storage unit 34. The transmission data generating unit 32 generates a digital audio stream to be transmitted, based on the read-out audio data. The digital audio stream is delivered to the wireless communication device 33 via the system control unit 31, and then sent to the headphones 20 by radio.

The wireless communication device 33 is a device for executing wireless communication with the headphones 20. The wireless communication device 33 executes wireless communication, for example, according to Bluetooth™ standards. The wireless communication device 33 is used to send audio data such as music to the headphones 20 by radio in the form of a data stream.

Bluetooth™ is a specification for short-range wireless communication. The Bluetooth™ standard adopts a master-slave configuration wherein wireless communication is executed between a master and one or more slaves wirelessly connected to the master. In the communication between the audio player 10 and headphones 20, the audio player 10 functions as a master and the headphones 20 function as a slave.

In Bluetooth™, Advanced Audio Distribution Profile (A2DP) is specified as a profile for streaming reproduction of audio data such as music. The audio player 10 functions as an originating device (called "source device" in the Bluetooth™ standard) that sends audio stream data, and the headphones 20 function as a destination device (called "sink device" in the Bluetooth™ standard) that receives the audio stream data.

The wireless communication device 33, as shown in FIG. 1, comprises an RF (Radio Frequency) unit 101, a digital data modulation unit 102 and a digital data demodulation unit 103. The digital data modulation unit 102 and digital data demodulation unit 103 function as baseband processing units.

The audio data storage unit 34 is a non-volatile storage device for storing audio data, and comprises a memory card or a hard disk drive, for instance. The audio data storage unit 34 can store a plurality of audio data such as music.

The status database 35 is a database for storing status information relating to audio data, transmission of which has been interrupted due to disconnection (cut-off) of wireless connection between the audio player 10 and headphones 20. The status database 35 is constructed on the same non-volatile storage device as the audio data storage unit 34, or on a different non-volatile storage device. The status information stored in the status database 35 is used to automatically resume a transmission process of audio data, which has been interrupted due to disconnection of wireless connection.

In order to resume interrupted transmission of audio data, the system control unit 31 includes a status data management unit 41 and a transmission resume control unit 42. According to embodiments of the present invention, when wireless connection (physical wireless link) between the audio player 10 and headphones 20 are disconnected while audio data is being transmitted from the audio player 10 to headphones 20 via the link, the status data management unit 41 stores in the status database 35 status data (status information) relating to the audio data, the transmission of which has been interrupted due to the disconnection of the wireless connection. The transmission resume control unit 42 resumes the interrupted transmission of audio data based on the status data stored in the status database 35, when the same headphones as the headphones 20 in which audio data transmission was interrupted due to the disconnection of wireless connection, is wirelessly connected once again to the audio player 10.

Further, in order to realize a retransmission error-correction technique wherein data in which an error was detected is retransmitted, the system control unit 31 includes a retransmission control unit 43. The retransmission control unit 43 retransmits to the head phones 20 the same data as the data that has been detected by the headphones 20 to be erroneous. The retransmission is a procedure executed during the transmission of audio data from the audio player 10 to headphones 20.

The user interface 36 comprises operation switches that can be operated by the user, a display monitor, etc.

The headphones 20 are an output device that receives an audio data stream sent from the audio player 10 by radio and outputs sound corresponding to the received audio data stream. The headphones 20 are configured to be wearable on the head of the user.

The headphones 20 comprise a head arm 201 and two pads 202 and 203 provided at both ends of the head arm 201, as shown in FIG. 1. Each pad 202, 203 incorporates a speaker.

In the state in which the headphones 20 are worn on the head of the user, the two pads 202 and 203 cover the right and left ears of the user. An outer surface of the pad 202 is provided with, for example, five operation switches 21 to 25, a power button 21, a play button 22, a stop button 23, a forward button 24 and a backward button 25.

The power button 21 is an operation button for powering on/off the headphones 20. The play button 22, stop button 23, forward button 24 and backward button 25 are operation buttons for controlling audio reproduction operations of the audio player 10.

The user can control the audio reproduction operations by manipulating the play button 22, stop button 23, forward button 24 and backward button 25 of the headphones 20, or by operating the user interface 36 of audio player 10.

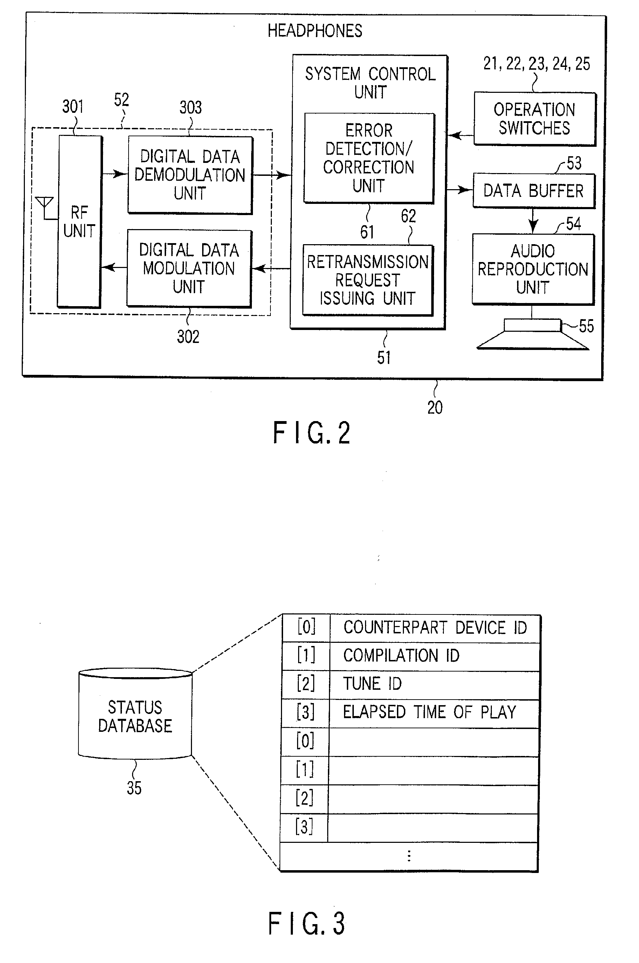

FIG. 2 shows a block diagram of the headphones 20, according to an embodiment of the present invention. The headphones 20 include, in addition to the above-mentioned operation switches 21 to 25, a system control unit 51, a wireless communication device 52, a data buffer 53 and an audio reproduction unit 54.

The system control unit 51 is a processor provided for controlling the operation of the headphones 20. The system control unit 51 controls the wireless communication device 52, audio reproduction unit 54, etc.

In order to realize the above-mentioned retransmission error-correction technique, the system control unit 51 includes an error detection/correction unit 61 and a retransmission request issuing unit 62. The error detection/correction unit 61 subjects the data received by the wireless communication device 52 to error detection and correction processing. When an error that cannot be corrected by the error detection/correction unit 61 has occurred, the retransmission request issuing section 62 issues a retransmission request for the associated data. The retransmission request is sent from the wireless communication device 52 to the originating (source) device.

Like the wireless communication device 33 of audio player 10, the wireless communication device 52 executes wireless communication according to Bluetooth™ standards.

The wireless communication device 52 is used to receive audio data such as music, which is sent from the audio player 10 by radio. The wireless communication device 52 is also used for a process of sending to the audio player 10 various reproduction control signals in accordance with operations of the play button 22, stop button 23, forward button 24 and backward button 25.

The wireless communication device 52 comprises an RF unit 301, a digital data modulation unit 302 and a digital data demodulation unit 303, as shown in FIG. 2. The digital data modulation unit 302 and digital data demodulation unit 303 function as baseband processing units.

The audio reproduction unit 54 executes a data reproduction process for so-called streaming reproduction. In the streaming reproduction, the audio reproduction unit 54 receives an audio data stream of music, etc. sent from the audio player 10 via the wireless communication device 52, system control unit 51 and data buffer 53, and at the same time converts the audio data stream to an electric signal that can be output as sound from the speaker 55 encased in each pad 202, 203.

Referring now to FIG. 3, an example of the status data stored in the status database 35 will now be described.

Each status data item includes a counterpart device identification (ID), a compilation ID, a tune (track) ID and an elapsed time of play.

The counterpart device ID is device ID information for identifying the transmission-destination device (sink device) to which transmission of the content data was interrupted due to disconnection of wireless connection. There may be more than one transmission-destination device that is receiving content data at the time of disconnection of one of the transmission-destination devices. While transmission of the content data from the audio player 10 to the one of the transmission-destination devices is interrupted due to disconnection of the wireless connection, others of the transmission-destination devices may remain wirelessly connected to the audio player 10 and continue to receive the transmitted content data. In addition, new transmission-destination devices may be wirelessly connected to the audio player 10. Thus, this device ID information is used to determine whether a device that is newly wirelessly connected to the audio player 10 is the same as the device in which audio data reproduction was previously interrupted due to disconnection of wireless connection.

The compilation ID is content ID information for identifying a compilation that contains the content data, transmission of which was interrupted by disconnection of wireless connection. The compilation comprises a plurality of mutually associated content data. The compilation may be taken, for example, from a compact disc (CD), digital video disc (DVD), a long playing (LP) record album, etc.

The tune ID is content ID information for identifying content data, transmission of which was interrupted by disconnection of the wireless connection.

The elapsed time of play is content ID information for determining a point of interruption of transmission of content data. This content ID information is used to manage a reproduction stop position of content data. In one embodiment, the elapsed time of play represents a time period from the beginning of play of content data to the halt of transmission of the content data, that is, a playing time that has elapsed. In other embodiments, the elapsed time of play may be a time that is stored and periodically updated during of the content data. The elapsed time of play is used in order to resume the transmission of content data from the actual point of interruption or from a point close to the actual point of interruption. Of course, according to other embodiments, the transmission of content data may be started once again from the beginning.

Referring to FIG. 4, a description will now be given of an embodiment of the operation that is executed when wireless connection between the audio player 10 and headphones 20 has been disconnected during transmission of audio data.

Assume that wireless connection has already been established between the audio player 10 and headphones 20. The audio player 10 functions as a master, and the headphones 20 are wirelessly connected as a slave to the audio player 10.
(1) The audio player 10 sends audio data to the headphones 20 by radio. According to one embodiment, an audio data stream output from the transmission data generating unit 32 is delivered to the wireless communication device 33 via the system control unit 31. The wireless communication device 33 sends the audio data stream to the headphones 20 by radio, which is wirelessly connected to the wireless communication device 33. The headphones 20 receive, and at the same time reproduce, the audio data stream ("streaming reproduction").
(2) If the user wearing the headphones 20 has moved out of the range that allows communication with the audio player 10, or if some obstacle to communication occurs, wireless connection between the audio player 10 and headphones 20 would be disconnected. If the wireless connection between the audio player 10 and headphones 20 is disconnected, no response is returned from the headphones 20 to the audio player 10. Based on the absence of a response from the headphones 20, the system control unit 31 of audio player 10 determines that wireless connection between the audio player 10 and headphones 20 has been disconnected. Then, the audio player 10 and headphones 20 pass into a disconnection state.
   Further, when the user has turned off the headphones 20, wireless connection between the audio player 10 and headphones 20 is disconnected. In this case, too, no response is returned from the headphones 20 to the audio player 10. Based on the absence of a response from the headphones 20, the system control unit 31 of audio player 10 determines that wireless connection between the audio player 10 and headphones 20 has been disconnected.
   If the power button 21 of headphones 20 doubles as a communication finish button, a disconnection request is sent from the headphones 20 to audio player 10 in response to a turn-off operation of the power button 21. Responding to the disconnection request, a normal disconnection procedure is carried out between the headphones 20 and audio player 10. Then, the audio player 10 and headphones 20 pass into a disconnection state. In this case, too, if the user performs a power-off operation of the power button 21 without performing an audio-reproduction stop operation, wireless connection between the audio player 10 and headphones 20 is disconnected during transmission of audio data. The power-off of the headphones 20 occurs not only when the power-off operation of the power button 21 is effected, but also when the battery power of the headphones 20 becomes low.
(3) In one embodiment, when wireless connection between the audio player 10 and headphones 20 has been disconnected during transmission of audio data, the system control unit 31 stores in the status database 35 status data (such as, but not limited to, counterpart device ID, compilation ID, tune ID, and elapsed time of play) relating to the audio data, the transmission of which has been interrupted due to the disconnection. The counterpart device ID is a device ID of the headphones 20. The device ID of headphones 20 is recognized by the audio player 10 during the procedure for establishing wireless connection with the headphones 20.

Referring now to FIG. 5, a description will be given of an embodiment of the operation executed at the time of re-establishing wireless connection between the audio player 10 and headphones 20.
(1) If the user wearing the headphones 20 comes back into the range that allows communication with the audio player 10, or if the user turns on the headphones 20, the audio player 10 detects the presence of headphones 20 and executes a process for establishing wireless connection between the audio player 10 and the headphones 20 using the wireless communication device 33. When the wireless connection is established, the system control unit 31 can obtain the device ID of the headphones 20 that have newly been wirelessly connected to the audio player 10.
(2) The system control unit 31 compares the counterpart device ID of each status data item stored in the status database 35 with the device ID of the newly wirelessly connected headphones 20. Thereby, the system control unit 31 determines whether the device that has newly been connected wirelessly to the audio player 10 is the same as the device in which audio data transmission was previously interrupted.
(3) In the case where the newly wirelessly connected headphones 20 are the same as the device in which audio data transmission was previously interrupted, that is, in the case where the status database 35 contains status data including the same device ID as that of the newly wirelessly connected headphones 20, the system control unit 31 resumes transmission of audio data to the newly connected headphones 20, based on the status data. The previously interrupted audio data stream is transmitted from the audio player 10 to the headphones 20, and thus the reproduction of audio data by the headphones 20 is resumed.

According to embodiments of the present invention, as described above, based on the stored status data, the process of transmission of the interrupted audio data is automatically resumed. Accordingly, the user can automatically resume the audio data reproduction without performing special operations for resuming audio data reproduction.

According to embodiments of the present invention, the transmission of audio data is resumed from the beginning of the audio data, or from the point of interruption that is represented by the elapsed time of play included in the status data. The user may preset whether to resume the audio data from the beginning of the audio data or from the point of interruption. Furthermore, in other embodiments, in addition or in the alternative, the transmission can be started from the first content data of the compilation designated by the compilation ID in the status data or from the beginning of a continuous user-selected play program of tunes (music data) previously programmed by the user. In addition, the user may choose not to resume the transmission of any interrupted content data by selecting a "no play" feature.

Referring now to the flow chart of FIG. 6, a description will be given of an exemplary embodiment of a process executed by the audio player 10.

Assume that the headphones 20 are powered off and the audio player 10 is not wirelessly connected to the headphones 20 (step S111).

The user wears the headphones 20 on the head, and depresses the power button 21. Thus, the headphones 20 are powered on. If the headphones 20 are powered on (YES in step S112), the wireless communication device 33 of audio player 10 detects the presence of headphones 20 ("device detection") and establishes wireless connection with the headphones (step S113).

Further, when the user wearing the powered-on headphones 20 has come back into the range within which communication with the headphones 20 is possible, the audio player 10 also establishes wireless connection with the headphones 20.

The system control unit 31 of audio player 10-reads out each status data item stored in the status database 35 and searches for the status data with the same device ID as the headphones 20 connected in step S113 (step S114, S115).

If the status data with the same device ID as the headphones 20 (YES in step S115) exists, the system control unit 31 determines that the audio data designated by the tune ID included in this status data is the audio data to be reproduced (step S116). The system control unit 31 controls the transmission data generating unit 32 and wireless communication device 33 and starts the process for transmitting by radio the audio data stream designated by the tune ID to the headphones 20 (step S117). In the mode in which the audio data transmission is resumed from the point of interruption, the system control unit 31 informs the transmission data generating unit 32 of the elapsed time of play included in the status data and controls the transmission data generating unit 32 so as to generate the audio data stream from the point corresponding to the elapsed time of play. The headphones 20 reproduce the audio data stream, while receiving it.

On the other hand, if the status data with the same device ID as headphones 20 could not be found (NO in step S115), the system control unit 31 waits for a reproduction start instruction (step S118). When the user has depressed the play button 22 of headphones 20, the headphones 20 sends a reproduction start instruction to the audio player 10. If the system control unit 31 receives the reproduction start instruction via the wireless communication device 33 (YES in step S118), the system control unit 31 determines, for example, that the audio data stored at the beginning of the audio data storage unit 34 is the audio data to be reproduced. In addition, the system control unit 31 controls the transmission data generating unit 32 and wireless communication device 33 and starts the process for transmitting by radio the determined audio data stream to the headphones 20 (step S117). The headphones 20 reproduce the audio data stream, while receiving it.

The user can change audio data to be reproduced, by manipulating the forward button 24 or backward button 25.

If the user depresses the stop button 23 during reproduction of audio data, the headphones 20 send a reproduction halt instruction to the audio player 10 by radio.

If the system control unit 31 receives the reproduction halt instruction via the wireless communication device 33 (YES in step S119), the system control unit 31 halts audio data transmission from the audio player 10 to headphones 20 (step S120). The operation of the transmission data generating unit 32 is also halted. The wireless connection between the audio player 10 and headphones 20 are not disconnected and is maintained.

On the other hand, if the user has depressed the power button 21 during reproduction of audio data and has turned off the headphones 20 or if the user wearing the headphones 20 has moved out of the range that allows communication with the audio player 10, the wireless communication between the audio player 10 and headphones 20 are disconnected. If the disconnection of the wireless connection is detected (YES in step S121), the system control unit 31 stores in the status database 35 the status data (counterpart device ID, compilation ID, tune ID, and elapsed time of play) relating to the currently transmitted audio data and halts the audio data transmission process (step S122, S123).

In the example of FIG. 6, the process of transmitting the interrupted audio data is resumed without waiting for the reproduction start instruction from the headphones 20. Alternatively, the audio data transmission process may be resumed in response to the reproduction start instruction from the headphones 20.

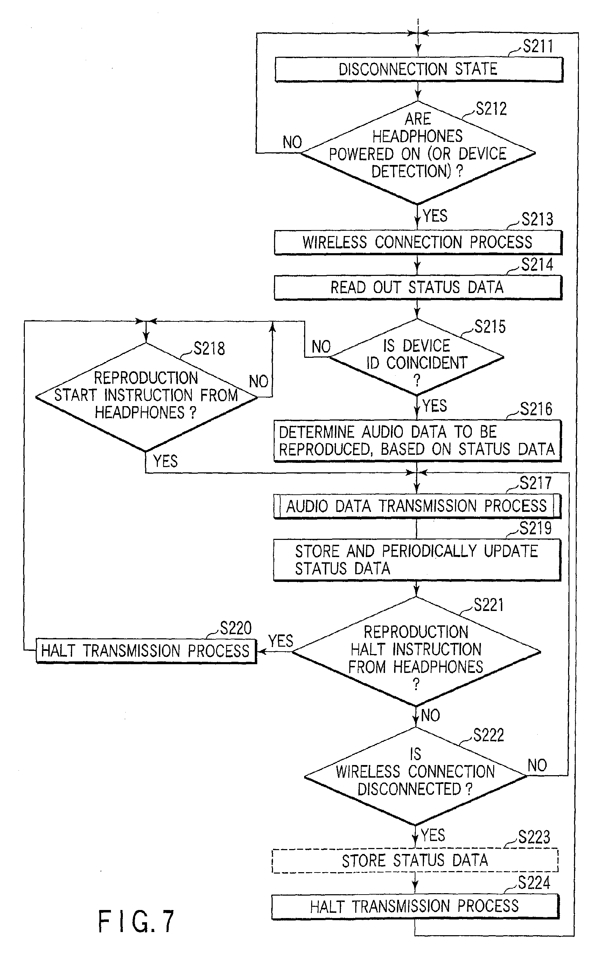

Referring now to the flow chart of FIG. 7, another embodiment of a process executed by the audio player 10 is shown. In the flow chart of FIG. 7, steps S211 to S218 are the same as S111 to S118, respectively, in the flow chart of FIG. 6. However, the embodiment of the process executed by the audio player 10 shown in FIG. 7 differs from that shown in FIG. 6 in that status data is stored and periodically updated during the audio data transmission process, as shown in S219.

Thus, according to the process shown in FIG. 7, once the audio data transmission process has begun (S217), status data (such as, but not limited to, counterpart device ID, compilation ID, tune ID, and elapsed time of play) may be stored and periodically updated during the transmission process. When disconnection of the wireless connection is detected (S222) and connection between the electronic apparatus and the external device is subsequently re-established, the transmission of the content data to the external device is resumed based on the stored and periodically updated status data.

The elapsed time of play may be tracked using, for example, a counter that is periodically updated. The period for updating the elapsed time of play may be selected to be short enough such that when disconnection of the wireless connection is detected, the latest update of the elapsed time of play is very close to the actual elapsed time of play at the time of disconnection.

Alternatively, as shown by S223 (shown in broken lines to indicate an alternative embodiment), status data relating to the elapsed time of play may be saved after disconnection to accurately reflect the actual elapsed time of play at the time of disconnection. Other status data may be stored and periodically updated at S219, as discussed above. In this manner, when disconnection of the wireless connection is detected (S222) and connection between the electronic apparatus and the external device is subsequently re-established, the transmission of the content data to the external device is resumed based on the actual elapsed time of play at the time of disconnection and the latest update of other status data. Steps S220, S221, and S224 are the same as S119, S120, and S123, respectively, of FIG. 6.

Next, a description will now be given of an exemplary embodiment wherein the user preselects an operation mode (automatic play resume mode) of an audio data transmission process that is automatically executed at the time of re-establishing wireless connection, whereby the user can freely alter the automatic play resume mode by his/her preference.

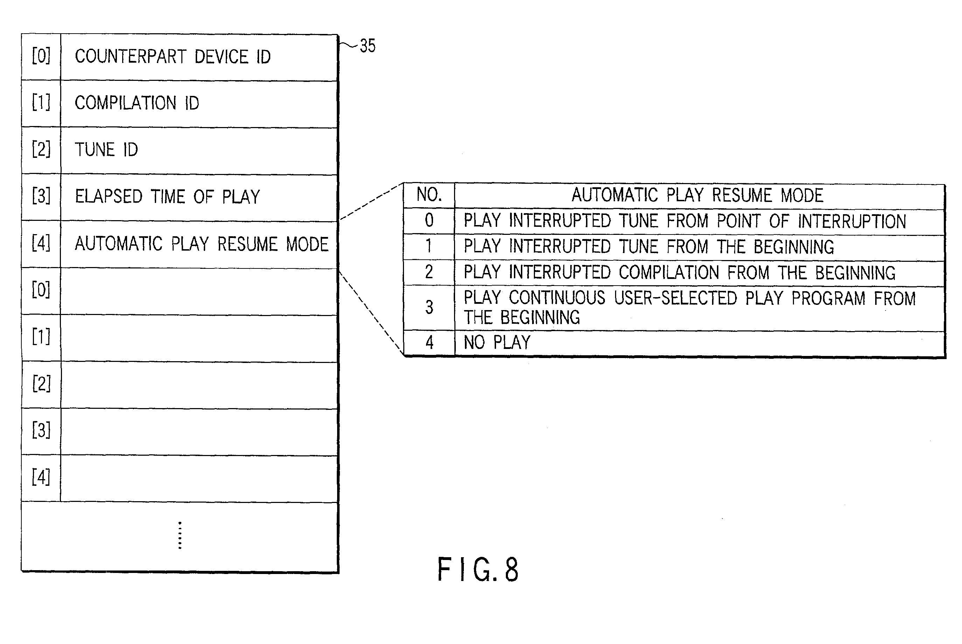

FIG. 8 shows an example of status data including an automatic play resume mode, in addition to the above-mentioned counterpart device ID, compilation ID, tune ID, and elapsed time of play. Embodiments of the automatic play resume mode specify a mode type No. 0, a mode type No. 1, a mode type No. 2, a mode type No. 3 and a mode type No. 4.

In the automatic play resume mode of type 0, the play of a tune (audio stream transmission) is resumed from a point of interruption of the tune. In this mode, the audio data stream, transmission of which was interrupted by disconnection of the wireless connection, is transmitted from the point of interruption in accordance with the tune ID and the elapsed time of play.

In the automatic play resume mode of type 1, the play of a tune (audio stream transmission) is resumed from the beginning. In this mode, the audio data stream, transmission of which was interrupted by disconnection of the wireless connection, is transmitted from the beginning in accordance with the tune ID.

In the automatic play resume mode of type 2, the play of a tune (audio stream transmission) is resumed from the beginning of the compilation including the tune, the playing of which was interrupted.

In the automatic play resume mode of type 3, if the user defines a continuous play program indicating an order of tunes to be reproduced, the play of a tune (audio stream transmission) can be resumed from the beginning of the continuous user-selected play program including the tune, the playing of which was interrupted.

In the automatic play resume mode of type 4, the playing is not automatically resumed.

The user can select one of the five mode types 0 to 4, for example, by operating the user interface 36 of audio player 10. The audio player 10 operates according to the selected mode type. According to other embodiments, the mode type may be selected using user interface 36.

Where the audio player 10 is shared by a plurality of users who have their own headphones, the automatic play resume mode type selected by each user may be managed in association with each user's headphone device ID.

In the example of FIG. 8, the types of the automatic play resume mode are included in each status data item. Thus, the automatic play resume mode type to be executed can be determined in accordance with the device ID of the headphones that have been newly wirelessly connected.

As has been described above, according to embodiments of the present invention, the status at the time of interruption of audio data reproduction is managed in the audio player 10. Thereby, the reproduction of audio data can automatically be resumed at the time of re-establishment of wireless connection, without the need to provide the headphones 20 with a special function relating to the resumption of audio data reproduction. Furthermore, since the status data includes the device ID, the audio data reproduction can be resumed only when the same device as the device, in which audio data transmission was interrupted due to the disconnection of wireless connection, has been wirelessly connected once again to the audio player 10.

The above described embodiments assume that the headphones 20 reproduce an audio data stream that is sent from the audio player 10 by radio. However, the content data to be sent to the headphones 20 is not limited to audio data.

For example, when the headphones 20 are equipped with a display device such as a video monitor, the display device of headphones 20 may display a stream of video data, etc. sent by radio from the electronic apparatus such as a video player. In this case, too, the aforementioned status data may be managed on the video player side, so that transmission of video data interrupted by disconnection of wireless connection may automatically be resumed. Thus, the configuration of the present embodiment is applicable to wireless transmission systems that transmit by radio various stream data such as, but not limited to, audio and video.

## Claims

1. An electronic apparatus for transmitting content data to an external device (20) for reproducing the content data, the electronic apparatus **characterized by** comprising:
a first storage unit (35);
a wireless communication device (33) for transmitting to the external device (20), via a wireless connection between the external device (20) and the electronic apparatus (10), the content data to be reproduced; and
a processor (31) programmed for:
storing in the storage unit (35) status information relating to the content data; and
resuming, after disconnection and re-establishment of the wireless connection, transmission of the content data to the external device (20) based on the stored status information.

2. The electronic apparatus according to claim 1, **characterized in that** the status information is stored when the wireless connection between the external device (20) and the electronic apparatus (10) is disconnected, and
wherein the status information relating to the content data comprises status information relating to content data, transmission of which was interrupted by the disconnection of the wireless connection.

3. The electronic apparatus according to claim 1, **characterized in that** at least a portion of the status information is stored and periodically updated during transmission to the external device (20) of the content data to be reproduced.

4. The electronic apparatus according to claim 1, **characterized in that** resuming the transmission of the content data to the external device (20) based on the stored status information comprises automatically resuming the transmission.

5. The electronic apparatus according to claim 1, **characterized in that** the content data comprises audio data, and wherein the external device (20) is configured to reproduce an audio data stream wirelessly transmitted from the electronic apparatus (10).

6. The electronic apparatus according to claim 1, **characterized in that** the external device (20) comprises headphones configured for wireless communication with the electronic apparatus (10).

7. The electronic apparatus according to claim 1, **characterized in that** the status information comprises content identification (ID) information for identifying content data, transmission of which was interrupted by the disconnection of the wireless connection, and device identification (ID) information for identifying a destination device to which transmission of the content data was interrupted by the disconnection of the wireless connection.

8. The electronic apparatus according to claim 7, **characterized in that** resuming the transmission of the content data to the external device (20) comprises determining, when an external device (20) is newly wirelessly connected to the electronic apparatus (10) after the disconnection of the wireless connection, whether the external device (20) newly wirelessly connected to the electronic apparatus (10) is the external device (20) to which transmission of the content data was interrupted, based on device identification (ID) information of the external device (20) newly wirelessly connected to the electronic apparatus (10) and the device identification (ID) information included in the status information.

9. The electronic apparatus according to claim 8, **characterized in that** when it has been determined that the external device (20) newly wirelessly connected to the electronic apparatus (10) is the external device (20) to which transmission of the content data was interrupted, the transmission of the content data to the external device (20) newly wirelessly connected to the electronic apparatus (10) is resumed based on the content identification (ID) information included in the status information.

10. The electronic apparatus according to claim 1, **characterized in that** resuming the transmission of the content data to the external device (20) comprises resuming the transmission of the content data to the external device (20) from at least one of a beginning of the content data, a beginning of a compilation of content data which includes the content data and a beginning of a continuous play program of content data.

11. The electronic apparatus according to claim 1, **characterized in that** the status information comprises first content identification (ID) information for identifying content data, transmission of which was interrupted by the disconnection of the wireless connection, and second content identification (ID) information for identifying a point of interruption of the transmission of the content data.

12. The electronic apparatus according to claim 11, **characterized in that** resuming the transmission of the content data to the external device (20) comprises transmitting the content data, the transmission of which was interrupted by the disconnection of the wireless connection, to the external device (20) from the point of interruption of the transmission, based on the first content identification (ID) information and the second content identification (ID) information.

13. The electronic apparatus according to claim 1, **characterized in that** the storing the status information comprises storing, each time the transmission of the content data is interrupted by the disconnection of the wireless connection, status information that comprises content identification (ID) information for identifying content data, transmission of which was interrupted by the disconnection of the wireless connection, and device identification (ID) information for identifying a destination device to which transmission of the content data was interrupted by the disconnection of the wireless connection.

14. The electronic apparatus according to claim 13, **characterized in that** resuming the transmission of the content data to the external device (20) comprises performing, when an external device (20) is newly wirelessly connected to the electronic apparatus (10) after the disconnection of the wireless connection, a search for status information, among the stored status information, which comprises device identification (ID) information that designates the newly wirelessly connected external device (20) as the destination device.

15. The electronic apparatus according to claim 14, **characterized in that** resuming the transmission of the content data to the external device (20) further comprises wirelessly transmitting content data designated by content identification (ID) information included in status information having the device identification (ID) information that designates the newly wirelessly connected external device (20) as the destination device.

16. The electronic apparatus according to claim 1, **characterized in that** the processor (31) is further programmed for setting an operation mode for resuming the transmission to one of a first operation mode in which the content data is transmitted from a point of interruption of the transmission, and a second operation mode in which the content data is transmitted from a beginning of the content data.

17. The electronic apparatus according to claim 1, **characterized by** further comprising:
a second storage unit (34) for storing the content data; and
a transmission data generating unit (32) for reading out the content data from the second storage unit (34) and for generating a digital data stream, based on the read-out content data, to be transmitted to the external device (20).

18. The electronic apparatus according to claim 1, **characterized by** further comprising a user interface (36) for controlling operations of the electronic apparatus (10).

19. An electronic apparatus for transmitting content data to an external device (20) for reproducing the content data, **characterized by** comprising:
means for transmitting to the external device (20), via a wireless connection between the external device (20) and the electronic apparatus (10), content data to be reproduced;
means for storing status information relating to the content data; and
means for resuming, after disconnection and re-establishment of the wireless connection, transmission of the content data to the external device (20) based on the stored status information.

20. The electronic apparatus according to claim 19, **characterized in that** the status information is stored when the wireless connection between the external device (20) and the electronic apparatus (10) is disconnected, and
wherein the status information relating to the content data comprises status information relating to content data, transmission of which was interrupted by the disconnection of the wireless connection.

21. The electronic apparatus according to claim 19, **characterized in that** at least a portion of the status information is stored and periodically updated during transmission to the external device (20) of the content data to be reproduced.

22. The electronic apparatus according to claim 19, **characterized in that** resuming transmission of the content data to the external device (20) based on the stored status information comprises automatically resuming the transmission.

23. The electronic apparatus according to claim 22, **characterized in that** the means for storing the status information comprises means for storing, as the status information, content identification (ID) information for identifying content data, transmission of which was interrupted by the disconnection of the wireless connection, and device identification (ID) information for identifying a destination device to which transmission of the content data was interrupted by the disconnection of the wireless connection.

24. The electronic apparatus according to claim 23, **characterized in that** the means for resuming the transmission comprises means for determining, when an external device (20) is newly wirelessly connected to the electronic apparatus (10) after the disconnection of the wireless connection, whether the external device (20) newly wirelessly connected to the electronic apparatus (10) is the external device (20) to which transmission of the content data was interrupted, based on device identification (ID) information of the external device (20) newly wirelessly connected to the electronic apparatus (10) and the device identification (ID) information included in the status information.

25. The electronic apparatus according to claim 24, **characterized in that**, when it has been determined that the external device (20) newly wirelessly connected to the electronic apparatus (10) is the external device (20) to which transmission of the content data was interrupted, the transmission of the content data to the external device (20) newly wirelessly connected to the electronic apparatus (10) is resumed based on the content identification (ID) information included in the status information.

26. The electronic apparatus according to claim 19, **characterized by** further comprising means for setting an operation mode for resuming the transmission to one of a first operation mode in which the content data is transmitted from a point of interruption of the transmission, and a second operation mode in which the content data is transmitted from a beginning of the content data.

27. In a system having an electronic apparatus (10) for transmitting content data and an external device (20) for receiving and reproducing the content data, a method of reproducing the content data, **characterized by** comprising:
transmitting the content data from the electronic apparatus (10) to the external device (20) via a wireless connection;
storing status information relating to the content data; and
resuming, after disconnection and re-establishment of the wireless connection, transmission of the content data from the electronic apparatus (10) to the external device (20) based on the stored status information.

28. The method according to claim 27, **characterized in that** storing status information relating to the content data comprises storing the status information when the wireless connection between the external device (20) and the electronic apparatus (10) is disconnected, and
wherein the status information relating to the content data comprises status information relating to content data, transmission of which was interrupted by the disconnection of the wireless connection.

29. The method according to claim 27, **characterized in that** storing status information relating to the content data comprises storing and periodically updating at least a portion of the status information during transmission to the external device (20) of the content data to be reproduced.

30. The method according to claim 27, **characterized in that** resuming transmission of the content data to the external device (20) based on the stored status information comprises automatically resuming the transmission.

31. The method according to claim 27, **characterized in that** the content data comprises audio data, and wherein the external device (20) is configured to reproduce an audio data stream wirelessly transmitted from the electronic apparatus (10).

32. The method according to claim 27, **characterized in that** the external device (20) comprises headphones configured for wireless communication with the electronic apparatus (10).

33. The method according to claim 27, **characterized in that** storing the status information comprises storing, as the status information, content identification (ID) information for identifying content data, transmission of which was interrupted by the disconnection of the wireless connection, and device identification (ID) information for identifying a destination device to which transmission of the content data was interrupted by the disconnection of the wireless connection.

34. The method according to claim 33, **characterized in that** resuming transmission of the content data from the electronic apparatus (10) to the external device (20) comprises determining, when an external device (20) is newly wirelessly connected to the electronic apparatus (10) after the disconnection of the wireless connection, whether the external device (20) newly wirelessly connected to the electronic apparatus (10) is the external device (20) to which transmission of the content data was interrupted, based on device identification (ID) information of the external device (20) newly wirelessly connected to the electronic apparatus (10) and the device identification (ID) information included in the status information.

35. The method according to claim 34, **characterized in that** when it has been determined that the external device (20) newly wirelessly connected to the electronic apparatus (10) is the external device (20) to which transmission of the content data was interrupted, the transmission of the content data to the external device (20) newly wirelessly connected to the electronic apparatus (10) is resumed based on the content identification (ID) information included in the status information.

36. The method according to claim 27, **characterized in that** the status information comprises first content identification (ID) information for identifying content data, transmission of which was interrupted by the disconnection of the wireless connection, and second content identification (ID) information for identifying a point of interruption of the transmission of the content data.

37. The method according to claim 36, **characterized in that** resuming transmission of the content data from the electronic apparatus (10) to the external device (20) comprises transmitting the content data, the transmission of which was interrupted by the disconnection of the wireless connection, to the external device (20) from the point of interruption of the transmission, based on the first content identification (ID) information and the second content identification (ID) information.

38. The method according to claim 27, **characterized by** further comprising setting an operation mode for resuming transmission of the content data from the electronic apparatus (10) to the external device (20) to one of a first operation mode in which the content data, the transmission of which was interrupted, is transmitted from a point of interruption, and a second operation mode in which the content data, the transmission of which was interrupted, is transmitted from a beginning of the content data.
